# EUROPEAN PATENT SPECIFICATION

(11) **EP 3 933 372 B1**
(45) Date of publication and mention of the grant of the patent: **28.08.2024**
(21) Application number: 20888732.3
(22) Date of filing: 15.12.2020
(51) Int. Cl.: G01M 17/08, G01L 3/16, G08B 21/18, B61H 13/20, B61H 13/34, B61J 3/12

(54) **BRAKE SIMULATION SYSTEM FOR CONTINENTAL RAILROAD CARS**
BREMSSIMULATIONSANLAGE FÜR KONTINENTALE EISENBAHNWAGEN
SYSTÈME DE SIMULATION DE FREINAGE POUR WAGONS DE CHEMIN DE FER CONTINENTAL

(30) Priority: 08.05.2020 KR 20200055060; 05.08.2020 KR 20200098060
(43) Date of publication of application: 05.01.2022
(73) Proprietor: Korea Railroad Research Institute, Uiwang-si, Gyeonggi-do 16105 (KR)
(72) Inventor: MUN, Hyung-Suk, Seoul 03009 (KR); PARK, Jung-Joon, Gyeonggi-do 16333 (KR); LEE, Sang-Keun, Gyeonggi-do 16103 (KR); LIM, Sung-Hyun, Seoul 01712 (KR)
(74) Representative: Petraz, Gilberto Luigi
(86) International application number: PCT/KR2020/018299
(87) International publication number: WO 2021/225246

(56) References cited:
- WO-A1-2018/201171
- CN-A- 111 006 887
- KR-A- 20200 002 825
- KR-B1- 100 493 562
- KR-B1- 100 611 196
- KR-B1- 101 486 910
- KR-Y1- 200 336 616

## Description

### Technical Field

The present invention relates to a braking simulation system for a continental railroad car and, more particularly, to a braking simulation system for a continental railroad car, wherein it is possible to perform a field test in which a plurality of air brake system modules of the railroad car is loaded on two or more freight carriages and actually driven to be simulated, and the space in which the air brake system modules are able to be loaded may be utilized as much as possible by using an articulated bogie, so that air braking simulation applied to large-scale freight carriages may be performed more effectively.

### Background Art

In general, a freight carriage for loading and transporting cargo uses a pneumatic brake system using compressed air. In production of a pneumatic pressure braking device for such a freight carriage, it may be essential to perform a sufficient braking test, by using a separate tester before actually installing the braking system, in order to measure idle running time, release time, braking pressure, and the like in advance.

Meanwhile, since a conventional braking tester performs a braking test based on a braking device installed in a single freight carriage, although it is possible to accurately measure the idle running time, release time, and braking pressure according to an operation of the brake system loaded on the single freight carriage, there is a problem in that the braking test may not be performed for a braking system installed on a large number of freight carriages.

That is, in general, freight carriages are operated by organizing a large number of carriages at a time, ranging from twenty to thirty carriages at a minimum to more than one hundred carriages. When a large number of freight carriages are organized and operated like this, since a braking device installed in each carriage is supplied with compressed air by using a single compressed air supply pipe to perform braking, there occurs differences in data including: idle running time, release time, and braking pressure, depending on delay in supply time of compressed air.

Since such data may not be measured with the conventional braking tester that only tests a single carriage and there is no tester for testing performance of a braking system for freight carriages organized in large quantities, there is a problem in that it is not possible to analyze the exact performance of the braking system in a case of organizing a large number of freight carriages.

Overseas, although a method is used in order to solve such a problem by installing a number of automatic air braking system simulators inside a laboratory to test a braking system, such a test method is not able to perform a field test for testing the braking system in an actual driving condition and is able to perform only a ground test. Moreover, for the ground test, more than a hundred simulators should be installed to test more than a hundred freight carriages, whereby there is a disadvantage in that huge installation space is required.

In addition, in the case of such a test method, when an abnormality occurs during a test, there is a disadvantage in that it is not easy for a user to identify which part of the hundred or more simulators has the abnormality.

In this regard, Korean Utility Model Application Publication No. 20-0336616 discloses a "FREIGHT CAR ORGANIZATION BREAK TESTER", wherein, the main technical configuration has characteristics in which known braking systems for freight carriages are organized by about 20 to 30 carriages, a pressure sensor is attached to a braking tank configured in each braking system, and then an operating time of the pressure sensor is measured by using a digital timer, whereby it is possible to accurately measure idle running time, release time, and braking pressure according to the braking system of a large number of freight carriages. However, there is a problem in that only 20 to 30 carriages are available for the braking test, which is limited, and as before, a field test that tests the braking system in an actual driving condition of the freight carriages is not possible.

In recent years, there have been attempts to develop a continental railroad route crossing the Eurasian continent. For example, an inter-Korean railroad connection project has been realized. In the case of a continental railroad, it is self-evident that freight carriages will be operated on a large scale, so there is an urgent need to develop a new type of braking simulation system that may be applied to large-scale freight carriages. Document WO 2018/201171 A1 discloses a method for carrying out an automatic brake test on a train, and carriage designed for this purpose. Document CN 111 006 887 A discloses an urban rail train brake system test platform.

### Disclosure

### Technical Problem

The present invention is devised to solve the above problems, and an objective of the present invention is to provide a braking simulation system for a continental railroad car, wherein not only it is possible to perform a field test by loading a plurality of braking modules of a railroad car on one or more freight carriages and actually driving and simulating the railroad car, but also a ground test of the braking modules is possible in a state of parking for each freight carriage loaded with the braking modules in an inspection station, so the size of an indoor space required for the braking simulation may be drastically reduced, and moreover, an interworking test with railroad cars of different countries respectively having different braking systems is possible.

In addition, another objective of the present invention is to provide a braking simulation system for a continental railroad car, wherein an articulated bogie is used for a field test of braking modules, and at the same time, the braking modules loaded on an upper part of the articulated bogie are hingedly coupled to neighboring front and rear braking modules by links, so that a more stable field test is possible and it is possible to reduce operating cost of the braking simulation system required for the field test.

### Technical Solution

In the present invention, as defined in independent claim 1, in order to achieve the above objectives, there is provided a braking simulation system for a continental railroad car, the braking simulation system including: a locomotive provided with a braking system; two or more freight carriages installed at a rear of the locomotive and connected thereto, the two or more freight carriages being connected to each other; a running rail on which the locomotive and freight carriages are driven; and a braking module in which braking devices provided in the two or more freight carriages of the railroad car are modularized in a stackable form, wherein the braking module includes braking modules connected in series to the braking system of the locomotive and stacked in multiple layers on an upper part of each freight carriage.

In this case, the braking simulation system may further include: an inspection station for a ground test of each of the braking modules; and a transfer rail installed between the running rail and the inspection station and connecting therebetween.

In addition, a parking space for allowing each freight carriage to be parked may be formed in the inspection station so that the ground test of each of the braking modules may be able to be performed in a state where the braking modules are loaded on the upper part of each freight carriage.

In addition, the parking space may be configured to correspond to the number of organized freight carriages.

In addition, the braking simulation system may further include a tractor for moving each freight carriage to the parking space along the transfer rail.

In addition, the locomotive may include: a controller for overall controlling movement of compressed air used for braking and an operation of each of the braking modules; and a monitoring means for monitoring braking performance of each braking module, wherein each braking module may be provided with an abnormality detecting means for generating a signal to the monitoring means when an abnormality occurs during a test.

In addition, a further freight carriage in which other braking modules each having a configuration different from those of the braking modules are stacked in the multiple layers may be installed at and connected to a front or rear of the freight carriage in which the braking modules are stacked in the multiple layers.

Meanwhile, each of the two or more freight carriages may be connected to each other by an articulated bogie, and each freight carriage may include: a first loading part positioned on the upper part of each of the freight carriages; and a second loading part positioned on a connection part between neighboring freight carriages each supported by the articulated bogie.

In addition, the first and second loading parts may respectively include: first and second support plates respectively installed on the upper part of each freight carriage and on which the braking modules are loaded; a hinge connection part installed between the first and second support plates and configured to connect therebetween; and a fixing means for fixing the first and second support plates to the upper part of the freight carriage.

In addition, the braking modules in which the braking devices using different braking systems are modularized may be respectively loaded on the upper parts of the first loading part and the second loading part of the freight carriage, or on the upper parts of the first loading parts provided in the neighboring freight carriages.

### Advantageous Effects

According to the present invention, there is an excellent effect in that not only it is possible to perform a field test by loading a plurality of braking modules of a railroad car on one or more freight carriages and actually driving and simulating the railroad car, but also a ground test of the braking modules is possible in a state of parking for each freight carriage loaded with the braking modules in an inspection station.

In addition, according to the present invention, there is another effect in that by using braking modules, the size of an indoor space required for the braking simulation may be drastically reduced, and moreover, an interworking test with railroad cars of different countries respectively having different braking systems is possible.

In addition, according to the present invention, by using an articulated bogie in a field test where a plurality of braking modules, in which braking devices installed in each freight carriage of a railroad car are modularized, are loaded and actually driven to be simulated, the braking modules may be loaded on a connection part positioned on an upper part of the articulated bogie between neighboring freight carriages, so that there is an excellent effect in that it is possible to maximally utilize the space in which the braking modules are able to be loaded, and accordingly, it is possible to reduce the time and cost required for the field test of the braking system applied to large-scale freight carriages.

In addition, according to the present invention, an articulated bogie is used for a field test of braking modules, and at the same time, the braking modules loaded on an upper part of the articulated bogie are hingedly coupled to neighboring front and rear braking modules by links, so that a more stable field test is possible, stability in the curve section is improved, and vibration generated during the driving process may be reduced, thereby having an additional effect in that disturbance that affects the field test may be reduced.

In addition, according to the present invention, each of braking modules, in which the braking device used in each freight carriage of different countries is modularized, is loaded on an upper part of each freight carriage and connected to each other, so as to have an additional effect in that an interworking test with railroad cars of different countries respectively having different braking systems is possible.

### Description of Drawings

FIG. 1 is a view showing a state of a field test using a braking simulation system for a continental railroad car according to an exemplary embodiment of the present invention.
FIG. 2 is a view showing a braking module of the present invention shown in FIG. 1.
FIG. 3 is a view conceptually showing components provided in a locomotive and freight carriages in the present invention shown in FIG. 1.
FIGS. 4 to 10 are views showing states of a ground test using the braking simulation system for a continental railroad car according to the present invention.
FIG. 11 is a view showing a state of a field test using another exemplary embodiment of the braking simulation system for a continental railroad car according to the present invention.
FIG. 12 is a view showing in detail a connection part between neighboring freight carriages to which an articulated bogie is applied in the present invention shown in FIG. 11.
FIG. 13 is a plan view showing in detail first and second loading parts respectively installed on upper parts of the freight carriage of the present invention shown in FIG. 11.
FIGS. 14 and 15 are views showing states of the ground test using the braking simulation system for a continental rail vehicle according to the present invention shown in FIG. 11.

### Best Mode

Hereinafter, preferred exemplary embodiments of the present invention will be described in more detail with reference to the accompanying drawings. The same reference numerals are used for the same elements in the drawings, and duplicate descriptions for the same elements are omitted. However, it should be understood that the present disclosure may be implemented in a number of different forms and is not limited to the described exemplary embodiments.

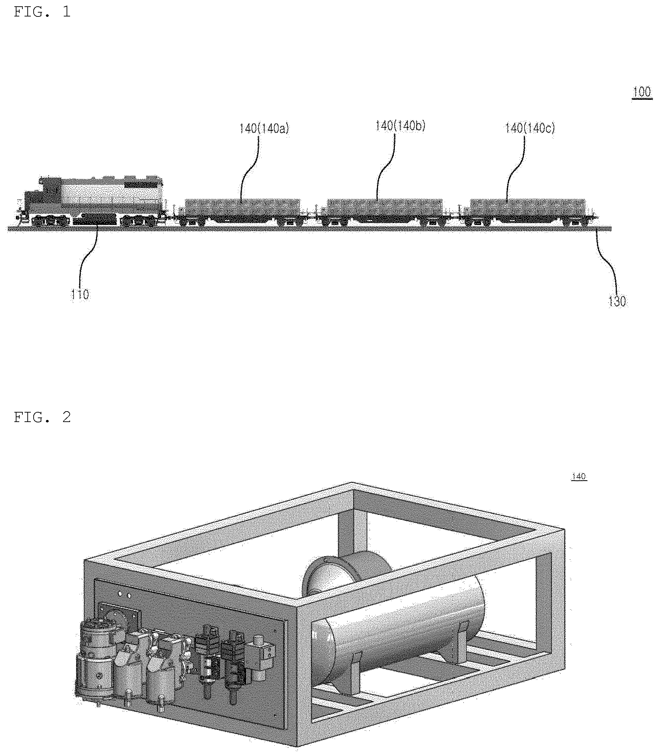

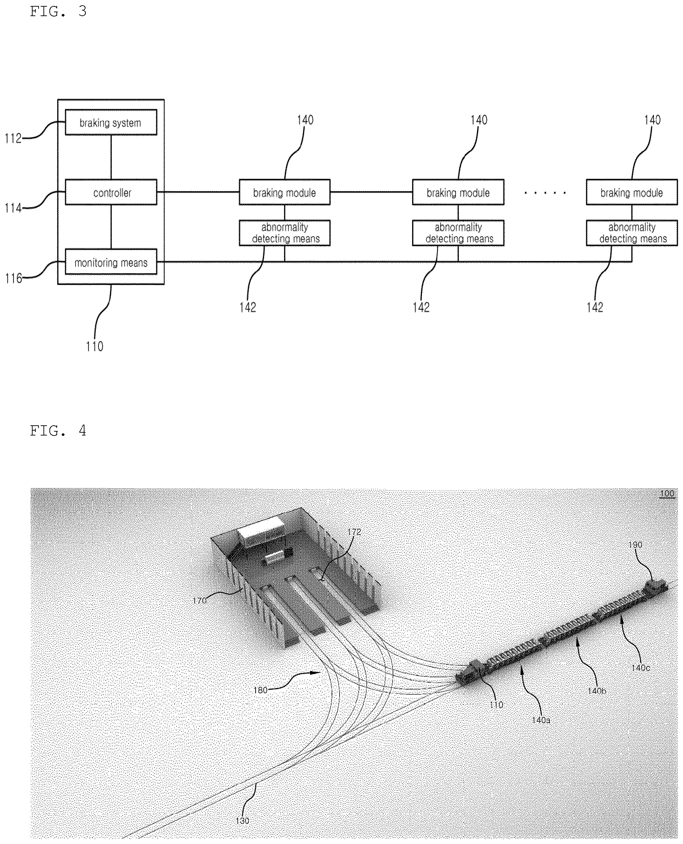

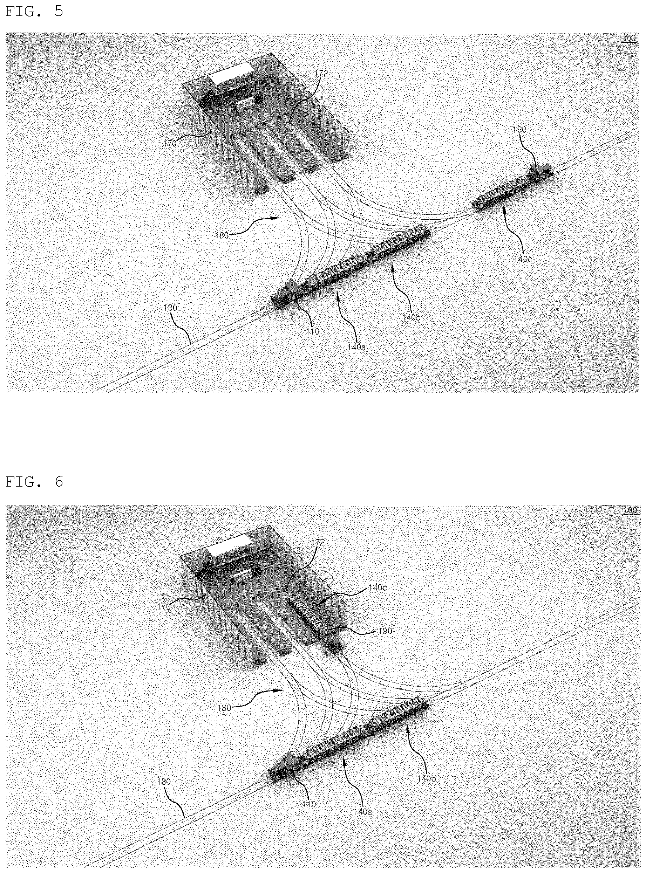

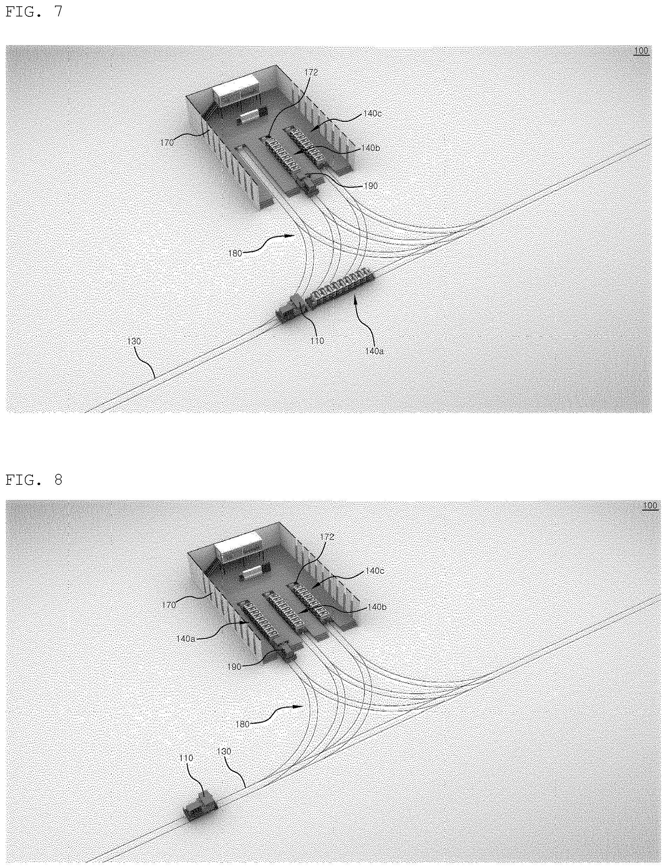

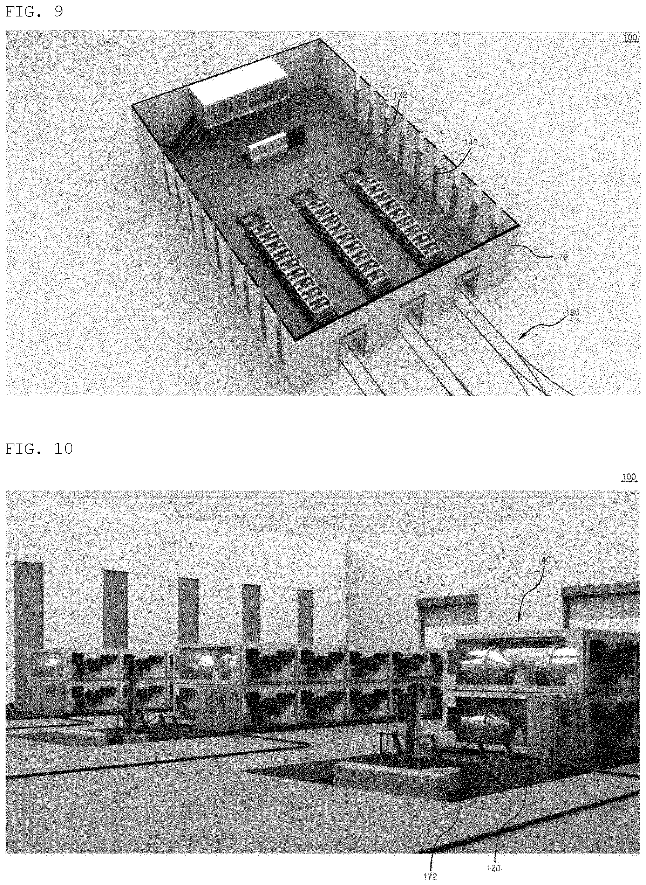

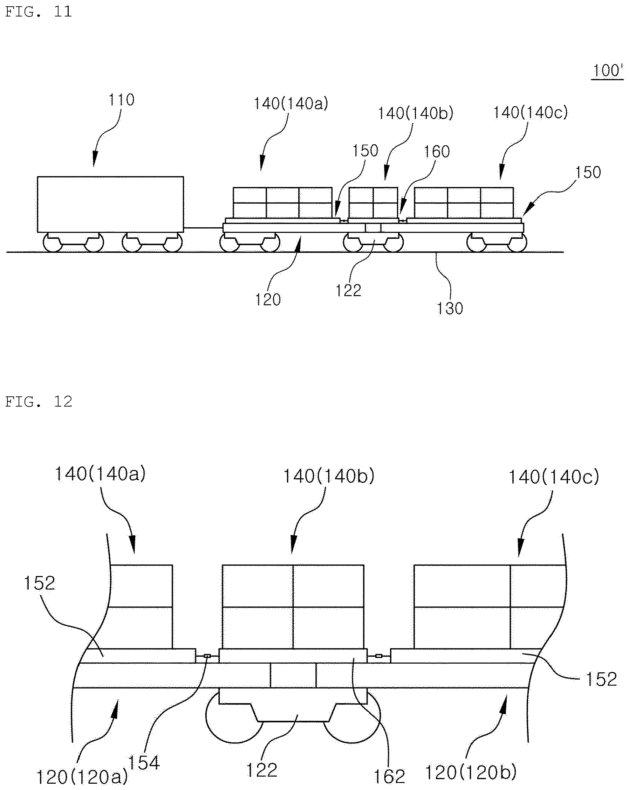

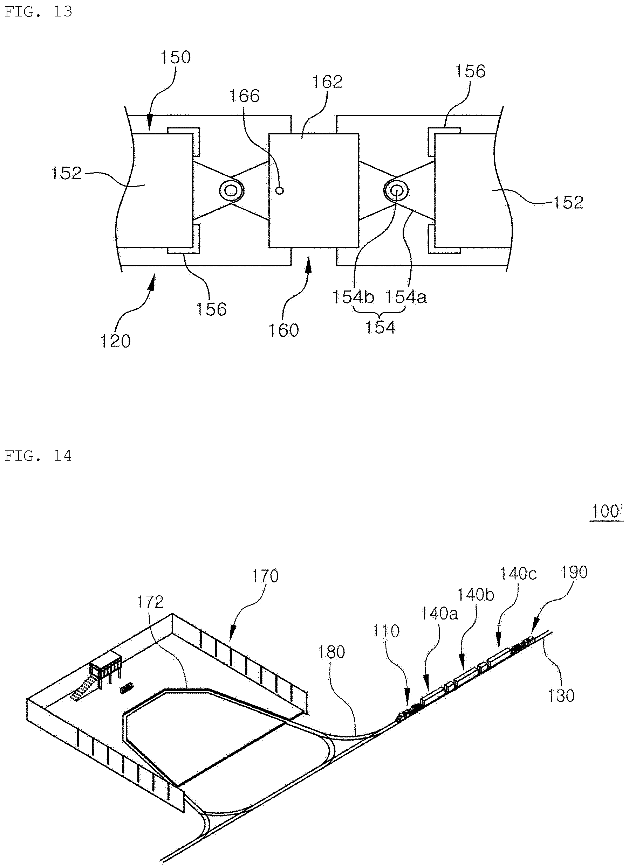

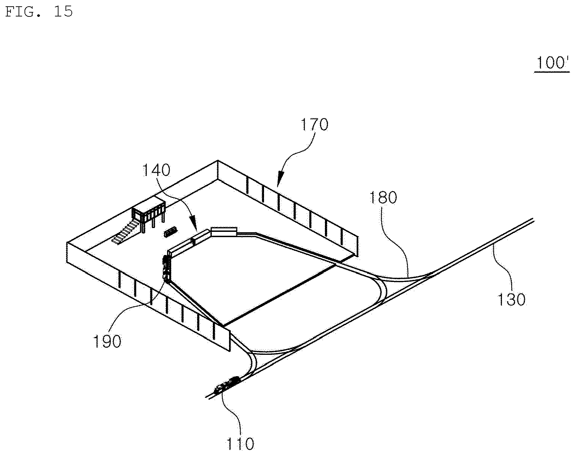

FIG. 1 is a view showing a state of a field test using a braking simulation system for a continental railroad car according to an exemplary embodiment of the present invention. FIG. 2 is a view showing a braking module of the present invention shown in FIG. 1. FIG. 3 is a view conceptually showing components provided in a locomotive and freight carriages in the present invention shown in FIG. 1. FIGS. 4 to 10 are views showing states of a ground test using the braking simulation system for a continental railroad car according to the present invention. FIG. 11 is a view showing a state of a field test using another exemplary embodiment of the braking simulation system for a continental railroad car according to the present invention. FIG. 12 is a view showing in detail a connection part between neighboring freight carriages to which an articulated bogie is applied in the present invention shown in FIG. 11. FIG. 13 is a plan view showing in detail first and second loading parts respectively installed on upper parts of the freight carriage of the present invention shown in FIG. 11. FIGS. 14 and 15 are views showing states of the ground test using the braking simulation system for a continental rail vehicle according to the present invention shown in FIG. 11.

The present invention relates to a braking simulation system 100 for a continental railroad car, wherein it is possible to perform a field test in which a plurality of air brake system modules of the railroad car is loaded on two or more freight carriages and actually driven to be simulated, and the space in which the air brake system modules are able to be loaded may be utilized as much as possible by using an articulated bogie, so that air braking simulation applied to large-scale freight carriages may be performed more effectively. As for the components shown in FIG. 1, the braking simulation system is mainly configured to include a locomotive 110, a freight carriage 120, a running rail 130, and a braking module 140.

In more detail, the locomotive 110 serves to perform a field test of braking modules 140, and pulls the freight carriages 120 loaded with the braking modules 140 to be described later to drive on a running rail 130, so that it is possible to perform the field test that simulates an operation of the braking system 112 during a driving process of an actual railroad car.

In this case, although not shown, the locomotive 110 is provided with a braking system 112 for supplying braking force to each freight carriage 120 connected to a rear thereof and each braking module 140 loaded on the freight carriage 120. The braking system 112 may be configured to include: a storage tank for storing compressed air used for braking; a compressor for supplying the compressed air stored in the storage tank to each braking module 140; a compressed air supply pipe through which the compressed air moves by driving of the compressor; and the like. Since a configuration of such a braking system 112 is the same as that of a braking system 112 of a railroad car provided in the conventional locomotive 110 using pneumatic pressure, a detailed description will be omitted.

In addition, as shown in FIG. 3, the locomotive 110 is provided with a controller 114 and a monitoring means 116, wherein the controller 114 serves to overall control an operation of each braking module 140 loaded on the freight carriage 120, and the monitoring means 116 serves to monitor braking performance of each braking module 140 loaded on the freight carriage 120. Since it is configured such that a signal from an abnormality detecting means 142 provided in the corresponding braking module 140 may be displayed on the monitoring means 116 when an abnormality occurs in a specific braking module 140 during simulation, a driver may immediately check the braking module 140 in which the abnormality has occurred, and perform a control such as stopping driving of the braking module 140 through the controller 114.

Next, the freight carriage 120 is installed and connected to the rear of the locomotive 110 and serves to allow the braking modules 140 for braking simulation to be loaded on the upper part thereof, and about 2 to 5 carriages of the freight carriages 120 may be used for the braking simulation.

Next, when performing a field test of each braking module 140, the running rail 130 serves as a track to enable a railroad car composed of the locomotive 110 and two or more freight carriages 120 connected to the locomotive 110 to drive, and some of the existing railroad tracks may be used.

Next, the braking module 140 is a module that modularizes in a stackable form: braking devices provided in one carriage of a railroad car, that is, one carriage of a railroad car such as a freight carriage 120 excluding the locomotive 110; and equipment for testing performance of the braking devices. While loaded on the upper part of the freight carriage 120, each braking module 140 is configured to perform a field test and a ground test.

In more detail, as shown in FIG. 2, in the braking module 140, the braking devices provided on one carriage of the railroad car are installed the inside and outside of a hard case made in a stackable form, and although not shown in the drawing, the braking module 140 may include: a compressed air tank for storing compressed air used for braking; a braking cylinder for generating braking force by pneumatic pressure supplied from the compressed air tank; a valve part for adjusting the flow of compressed air supplied from the braking system 112 of the locomotive 110 and the flow of compressed air inside the braking module 140; and a piping part for serving as a passage through which the compressed air supplied from the braking system 112 and the compressed air used in the braking module 140 move.

In addition, the valve part may include: a control valve for controlling the pressure inside the compressed air tank and the braking cylinder; a response load valve for automatically increasing or decreasing braking force depending on loading weight of a railroad car; and a load detection valve for sensing the loading weight of the railroad car and converting the loading weight into pneumatic pressure and transmitting the pneumatic pressure to the response load valve.

The components of the braking devices as described above, that is, the components of the braking devices that may be included in the braking module 140 are the same as those of the braking devices installed in one carriage of the existing railroad cars, so a more detailed description such as roles, and an installation location of each component will be omitted.

In addition, since the components installed in one carriage may vary depending on the type of a braking system 112 used in a railroad car, the components of the braking device constituting the braking module 140 may also vary depending on the type of braking system 112 used in the entire railroad car.

In addition, the braking module 140 may include a load generator for applying a load detected by a load detection valve according to a signal from the controller 114 provided in the locomotive 110, that is, the controller 114 that controls the operation of each braking module 140, and additionally, may include numerous equipment for testing the performance of the braking devices including various valves for controlling movement of compressed air and sensors for detecting the valves.

In addition, an abnormality detecting means 142 may be installed in each braking module 140. The abnormality detecting means 142 serves to generate a signal when an abnormality occurs in a braking module 140 during a field test using the braking module 140, wherein the signal generated from the abnormality detecting means 142 is displayed on the monitoring means 116 provided in the locomotive 110, so that an engine driver may easily recognize the braking module 140 where the abnormality has occurred during the field test.

Meanwhile, the braking system 112 of a railroad car differs by country, and may also vary depending on the type or use purpose of the railroad car. Depending on the type of braking system 112, the configuration of the braking device installed in one carriage of a railroad car is also different.

Accordingly, the detailed configuration of the braking device installed in the braking module 140 and the equipment configured to test the performance of the braking device may be variously changed as well. For example, when the braking modules 140 of South Korea, China, and Russia composed of both the braking devices installed in one freight carriage 120 and the equipment configured to test performance of the braking devices are respectively called as the first to third braking modules 140a, 140b, and 140c, and when three freight carriages 120 connected to the locomotive 110 and on which the braking modules 140 are loaded are respectively called the first to third freight carriage 120a, 120b, and 120c, a field test or ground test to be described later may be performed in a state where the first freight carriage 120a is loaded with a first braking module 140a, the second freight carriage 120b is loaded with a second braking module 140b, and the third freight carriage 120c is loaded with a third braking module 140c.

That is, the field test and ground test may be performed by respectively loading braking modules 140 that modularizes braking devices of a railroad car using different braking systems 112 on freight carriages 120 different from each other. The freight carriages 120a and 120c on which braking modules 140a and 140c composed of components and braking systems different from those of the braking module 140b are stacked in multiple layers are respectively installed and connected to the front and rear of the freight carriage 120b on which the braking modules 140b are stacked in multiple layers, so that there is an advantage in that a simulation is performed on the braking modules 140 respectively having different structures and it is possible to simulate an interworking test with railroad cars of different countries each having braking systems 112 different from each other.

Meanwhile, as shown in FIGS. 4 to 10, the braking simulation system 100 for a continental railroad car may further include: an inspection station 170; and a transfer rail 180, wherein the inspection station 170 serves to perform a ground test of the braking module 140, i.e., a performance test while stationary on the ground, and is installed on the ground in an area neighboring to the running rail 130 on which the field test is performed.

In this case, parking spaces 172 in which two or more freight carriages 120 connected to the locomotive 110 are allowed to be respectively parked are formed in the inspection station 170, and equipment for a performance test of the braking modules 140 in a state loaded on each freight carriage 120 is installed around the parking spaces 172.

Next, the transfer rails 180 are installed between the running rail 130 on which the field test of the braking modules 140 is performed and the inspection station 170, that is, the parking spaces 172 formed in the inspection station 170, wherein each freight carriage 120 loaded with the braking modules 140 for which the field test has been completed is towed into and parked in one of the parking spaces 172 of the inspection station 170 via one of the transfer rails 180 from the running rail 130 by the locomotive 110 or a separate tractor 190, whereby the ground test of the braking module 140 may be performed while still loaded on the upper part of the freight carriage 120.

In this case, it is apparent that after performing the ground test on the braking modules 140 loaded on each freight carriage 120 parked in one of the parking spaces 172 in the inspection station 170, each freight carriage 120 may be moved to the running rail 130 via the one of the transfer rails 180 by using the locomotive 110 or the separate tractor 190, so as to perform a field test as well.

Meanwhile, as shown in FIG. 11, according to another exemplary embodiment of the braking simulation system 100' for a continental railroad car according to the present invention, a connection part positioned between neighboring freight carriages 120 may be supported by an articulated bogie 122.

In this case, since the rest of the components of the braking simulation system for another continental railroad car according to the present invention configured as described above is the same as the above-described exemplary embodiment, a detailed description thereof will be omitted.

Meanwhile, in the case of a general freight carriage 120 provided with two bogies for each carriage, since the space between neighboring carriages is wide, the braking module 140 may be installed only on the upper part of an underframe of each carriage. Whereas according to the present invention, since a railroad car to which an articulated bogie 122 is applied has a relatively narrow space between neighboring carriages, the braking modules 140 is also able to be loaded in a space positioned on an upper part of the articulated bogie 122 between neighboring carriages, whereby it is possible to use the space in the upper part of the freight carriage 120 more efficiently.

In addition, when using a freight carriage 120 to which the articulated bogie 122 is applied, a height of the freight carriage may be lowered to enable a more stable field test, stability may be improved in a curved section, and vibration generated during a driving process may be reduced, whereby there may be an effect of reducing disturbance that affects the field test.

In this case, as shown in FIG. 12, a first loading part 150 and a second loading part 160 may be provided on upper parts of a freight carriage 120 on which braking modules 140 to be described later are loaded. The first and second loading parts 150 and 160 serve to more stably support the braking modules 140 loaded on an upper part of the freight carriage 120, wherein the first loading part 150 is installed on an upper part of each freight carriage 120 and the second loading part 160 is installed on a connection part between neighboring freight carriages 120 each supported by an articulated bogie 122.

In more detail, as shown in FIG. 13, the first and second loading parts 150 and 160 may be configured to include: first and second support plates 152 and 162; a hinge connection part 154; and fixing means 156 and 166. First, the first and second support plates 152 and 162 are respectively installed on upper parts of a freight carriage 120 to support the lower part of the braking module 140, wherein the first support plate 152 constituting the first loading part 150 is installed on an upper part of each freight carriage 120, and the second support plate 162 constituting the second loading part 160 is installed on an upper part of a connection part between neighboring freight carriages 120.

Next, a hinge connection part 154 is installed between the first support plate 152 and the second support plate 162 and connects therebetween, and includes: a pair of connection members 154a having ends thereof respectively installed at ends of the first support plate 152 and the second support plate 162; and a hinge coupling part 154b provided at a connection part between the connection members 154a, wherein each braking module 140 loaded on the second support plate 162 serves to stably maintain a loaded state even when a railroad car is driving in a curved section during a field test of each braking module 140.

In more detail, when a railroad car enters a curved section during a field test of braking modules 140, a refracted angle is generated at a connection part positioned at an upper part of the articulated bogie 122 between neighboring freight carriages 120, that is, at a position between a rear end of the front freight carriage 120 and a front end of the rear freight carriage 120.

Accordingly, there is a risk in which the second support plate 162 may be deformed or damaged when the second support plate 162, installed on the connection part between the front freight carriage 120 and the rear freight carriage 120, is fixedly installed on the freight carriage 120.

Accordingly, as described above, when the first support plate 152 and the second support plate 162 are installed and connected to the hinge connection part 154 to be driven in a curved section, the second support plate 162 is supported by the first support plates 152 each positioned at the front and rear freight carriages 120 and is able to be freely rotated according to an angle change at the connection part between the front freight carriage 120 and the rear freight carriage 120, so that the braking modules 140 loaded on the upper part of the second support plate 162 maintain a stable loading state even in the curved section.

In this case, a pair of connection members 154a respectively installed at ends of the first support plate 152 and the second support plate 162 may be formed to have various shapes such as wires, chains, and belts.

Next, the fixing means 156 and 166 respectively serves to fix the first and second support plates 152 and 162 to upper parts of each freight carriage 120, and in the case of the first support plate 152, each of four corner parts is fixed to an upper part of a freight carriage 120 by a fastening means (not shown) such as a bolt, or by a fixing means 156 such as a fixing frame.

In addition, as described above, when a railroad car under a field test is driving on a curved section, a second support plate 162 should also have a structure to be able to be rotated by an angle change of a connection part between a front freight carriage 120 and a rear freight carriage 120 each supported by an articulated bogie 122, a front or rear central part, or each opposite corner part of the second support plate 162 is fixed to an upper part of a freight carriage 120 by the fixing means 166 such as a hinge pin.

In this case, the detailed configuration of the braking device installed in the braking module 140 and the equipment configured to test the performance of the braking device may be variously changed as well. For example, when the braking modules 140 of South Korea, China, and Russia composed of both the braking devices installed in one freight carriage 120 and the equipment configured to test performance of the braking devices are respectively called as the first to third braking modules 140a, 140b, and 140c, and when three freight carriages 120 connected to the locomotive 110 and on which the braking modules 140 are loaded are respectively called the first to third freight carriage 120a, 120b, and 120c, a field test or a ground test to be described later may be performed in a state where the first braking module 140a is loaded on a first loading part 150 on an upper part of the first carriage 120a, the second braking module 140b is loaded on the second loading part 160 on an upper part of a connection part between the first and second freight carriages 120a and 120b, and the third braking module 140c is loaded on a first loading part 150 on an upper part of the second freight carriage 120b.

Meanwhile, as shown in FIGS. 14 and 15, a parking space 172 is formed in an inspection station 170 so that two or more freight carriages 120 each connected by an articulated bogie 122 may be parked. The parking space 172 may be formed to have an arc shape or a curved shape as a whole in consideration that an angle of a connection part positioned on an upper part of the articulated bogie 122 between neighboring freight carriages 120 is adjustable, and is configured to allow about two to five freight carriages 120 to be parked therein.

Next, a transfer rail 180 is installed between the running rail 130 on which a field test of the braking modules 140 is performed and the inspection station 170, that is, the parking space 172 formed in the inspection station 170, and connects therebetween, wherein each freight carriage 120 loaded with the braking modules 140 for which the field test has been completed is towed into the parking space 172 of the inspection station 170 via the transfer rail 180 from the running rail 130 by a locomotive 110 or a separate tractor 190, and then parked therein, so that a ground test of the braking modules 140 may be performed still in the same state of being loaded on the upper part of each freight carriage 120.

In this case, it is apparent that after performing the ground test on the braking modules 140 loaded on each freight carriage 120 parked in the parking space 172 in the inspection station 170, the freight carriages 120 may be moved to the running rail 130 via the transfer rail 180 by using the locomotive 110 or the separate tractor 190, so as to perform a field test as well.

Therefore, according to the braking simulation system 100 for a continental railroad car according to the present invention as described above, braking modules 140 may also be loaded at a connection part positioned on an upper part of an articulated bogie 122 between neighboring freight carriages 120 plurality of braking modules 140 in which braking devices installed in each freight carriage 120 of a railroad car are modularized is loaded and actually driven to be simulated, so that the space where the braking modules 140 are able to be loaded may be utilized as much as possible, it is possible to reduce time and cost required for the field test of the braking system applied to large-scale freight carriages 120 accordingly, a more stable field test is possible by allowing the braking modules 140 loaded on the upper part of the articulation bogie 122 to be hingedly coupled to neighboring front and rear braking modules by links, disturbances affecting the field test may be reduced due to the fact that stability may be improved in a curved section, and vibrations generated during the driving process may be reduced, and at the same time, the braking modules 140 in which braking devices used in freight carriages 120 of different countries are modularized are loaded on the upper part of each freight carriage 120 and connected to each other so as to be able to simulate an interworking test with railroad cars respectively having different braking systems used in different countries, thereby having various advantages.

### Industrial Applicability

The present invention relates to a braking simulation system for a continental railroad car and, more particularly, to a braking simulation system for a continental railroad car, wherein it is possible to perform a field test in which a plurality of air brake system modules of the railroad car is loaded on two or more freight carriages and actually driven to be simulated, and the space in which the air brake system modules are able to be loaded may be utilized as much as possible by using an articulated bogie, so that air braking simulation applied to large-scale freight carriages may be performed more effectively.

## Claims

1. A braking simulation system (100, 100') for a continental railroad car, the braking simulation system comprising:
a locomotive (110) provided with a braking system (112);
two or more freight carriages (120) installed at a rear of the locomotive (110) and connected thereto, the two or more freight carriages (120) being connected to each other;
a running rail (130) on which the locomotive (110) and freight carriages (120) are driven;
**characterized in that** it comprises
a braking module (140) in which braking devices provided in the two or more freight carriages (120) of the railroad car are modularized in a stackable form,
wherein the braking module (140) comprises braking modules connected in series to the braking system (112) of the locomotive (110) and stacked in multiple layers on an upper part of each freight carriage (120).

2. The braking simulation system (100, 100') of claim 1, further comprising:
an inspection station (170) for a ground test of each of the braking modules (140); and
a transfer rail (180) installed between the running rail (130) and the inspection station (170) and connecting therebetween.

3. The braking simulation system (100, 100') of claim 2, wherein a parking space (172) for allowing each freight carriage (120) to be parked is formed in the inspection station (170) so that the ground test of each of the braking modules is able to be performed in a state where the braking modules are loaded on the upper part of each freight carriage (120).

4. The braking simulation system (100, 100') of claim 3, wherein the parking space (172) is configured to correspond to the number of organized freight carriages (120).

5. The braking simulation system (100, 100') of claim 3, further comprising:
a tractor (190) for moving each freight carriage (120) to the parking space (172) along the transfer rail (180).

6. The braking simulation system (100, 100') of claim 1, wherein the locomotive (110) comprises:
a controller (114) for overall controlling movement of compressed air used for braking and an operation of each of the braking modules (140); and
a monitoring means (116) for monitoring braking performance of each braking module (140),
wherein each braking module (140) is provided with an abnormality detecting means (142) for generating a signal to the monitoring means when an abnormality occurs during a test.

7. The braking simulation system (100, 100') of claim 1, wherein a further freight carriage (120a, 120c) in which other braking modules (140a, 140c) each having a configuration different from those of the braking modules (140b) are stacked in the multiple layers is installed at and connected to a front or rear of the freight carriage (120b) in which the braking modules (140b) are stacked in the multiple layers.

8. The braking simulation system (100, 100') of claim 1, wherein each of the two or more freight carriages (120) are connected to each other by an articulated bogie (122), and
each freight carriage (120) comprises:
a first loading part (150) positioned on the upper part of each of the freight carriages (120); and
a second loading part (160) positioned on a connection part between neighboring freight carriages (120) each supported by the articulated bogie (122).

9. The braking simulation system (100, 100') of claim 8, wherein the first and second loading parts (150, 160) respectively comprise:
first and second support plates (152, 162) respectively installed on the upper part of each freight carriage (120) and on which the braking modules (140) are loaded;
a hinge connection part (154) installed between the first and second support plates (152, 162) and configured to connect therebetween; and
a fixing means (156, 166) for fixing the first and second support plates (152, 162) to the upper part of the freight carriage (120).

10. The braking simulation system (100, 100') of claim 8, wherein the braking modules (140) in which the braking devices using different braking systems are modularized are respectively loaded on the upper parts of the first loading part (150) and the second loading part (160) of the freight carriage (120), or on the upper parts of the first loading parts (150) provided in the neighboring freight carriages (120).

## Patentansprüche

1. Bremssimulationssystem (100, 100') für ein Kontinentaleisenbahnfahrzeug, wobei das Bremssimulationssystem aufweist:
eine Lokomotive (110), die mit einem Bremssystem (112) ausgestattet ist,
zwei oder mehr Frachteisenbahnwägen (120), die an der Hinterseite der Lokomotive (110) installiert und mit dieser verbunden sind, wobei die zwei oder mehr Frachteisenbahnwägen (120) miteinander verbunden sind,
eine Fahrschiene (130), auf welcher die Lokomotive (110) und die Frachteisenbahnwägen (120) gefahren werden,
**dadurch gekennzeichnet, dass** es aufweist
ein Bremsmodul (140), bei welchem Bremsvorrichtungen, die in den zwei oder mehr Frachteisenbahnwägen (120) des Kontinentaleisenbahnfahrzeugs bereitgestellt sind, in einer stapelbaren Form modularisiert sind,
wobei das Bremsmodul (140) Bremsmodule aufweist, die in Serie mit dem Bremssystem (112) der Lokomotive (110) verbunden sind und in mehreren Schichten auf einem oberen Abschnitt jedes Frachteisenbahnwagens (120) gestapelt sind.

2. Bremssimulationssystem (100, 100') gemäß Anspruch 1, ferner aufweisend:
eine Inspektionsstation (170) für einen Bodentest jedes der Bremsmodule (140) und
eine Transferschiene (180), die zwischen der Fahrschiene (130) und der Inspektionsstation (170) installiert ist und diese miteinander verbindet.

3. Bremssimulationssystem (100, 100') gemäß Anspruch 2, wobei ein Parkplatz (172) zum Ermöglichen, jeden Frachteisenbahnwagen (120) zu parken, in der Inspektionsstation (170) ausgebildet ist, sodass der Bodentest jedes der Bremsmodule in einem Zustand durchgeführt werden kann, in welchem die Bremsmodule auf dem oberen Abschnitt jedes Frachteisenbahnwagens (120) angeordnet sind.

4. Bremssimulationssystem (100, 100') gemäß Anspruch 3, wobei der Parkplatz (172) konfiguriert ist, um zu der Anzahl an organisierten Frachteisenbahnwägen (120) zu korrespondieren.

5. Bremssimulationssystem (100, 100') gemäß Anspruch 3, ferner aufweisend:
einen Schlepper (190) zum Bewegen jedes Frachteisenbahnwagens (120) entlang der Transferschiene (180) zum Parkplatz (172).

6. Bremssimulationssystem (100, 100') gemäß Anspruch 1, wobei die Lokomotive (110) aufweist:
eine Steuervorrichtung (114) zum insgesamt Steuern der Bewegung von Druckluft, die zum Bremsen verwendet wird, und einer Betätigung jedes der Bremsmodule (140), und
ein Überwachungsmittel (116) zum Überwachen der Bremsperformance jedes Bremsmoduls (140),
wobei jedes Bremsmodul (140) bereitgesellt ist mit einem Unregelmäßigkeit-Erfassungsmittel (142) zum Erzeugen eines Signals an das Überwachungsmittel, wenn eine Unregelmäßigkeit während eines Tests auftritt.

7. Bremssimulationssystem (100, 100') gemäß Anspruch 1, wobei ein weiterer Frachteisenbahnwagen (120a, 120c), bei dem andere Bremsmodule (140a, 140c), von denen jedes eine Konfiguration hat, die von jenen der Bremsmodule (140b) verschieden ist, in mehreren Schichten gestapelt sind, an einer Vorderseite oder an einer Hinterseite des Frachteisenbahnwagens (120b) installiert sind, bei welchem die Bremsmodule (140b) in den mehreren Schichten gestapelt sind.

8. Bremssimulationssystem (100, 100') gemäß Anspruch 1, wobei jeder der zwei oder mehr Frachteisenbahnwagen (120) miteinander verbunden sind durch ein Drehgestell (122), wobei jeder Frachteisenbahnwagen (120) aufweist:
einen ersten Ladeabschnitt (150), der an dem oberen Abschnitt jedes der Frachteisenbahnwagen (120) positioniert ist, und
einen zweiten Ladeabschnitt (160), der an einem Verbindungsabschnitt zwischen benachbarten Frachteisenbahnwägen (120) positioniert ist, von denen jeder von dem Drehgestell (122) abgestützt ist.

9. Bremssimulationssystem (100, 100') gemäß Anspruch 8, wobei der erste und der zweite Ladeabschnitt (150, 160) zugeordnet aufweisen:
eine erste und eine zweite Stützplatte (152, 162), die jeweils auf dem oberen Abschnitt jedes Frachteisenbahnwagens (120) installiert sind und auf welche die Bremsmodule (140) aufgeladen sind,
einen Gelenkverbindungsabschnitt (154), der zwischen der ersten und der zweiten Stützplatte (152, 162) installiert ist und konfiguriert ist, um diese miteinander zu verbinden, und
ein Fixiermittel (156, 166) zum Fixieren der ersten und der zweiten Stützplatte (152, 162) an dem oberen Abschnitt des Frachteisenbahnwagens (120).

10. Bremssimulationssystem (100, 100') gemäß Anspruch 8, wobei die Bremsmodule (140), bei denen die Bremsvorrichtungen, die unterschiedliche Bremssysteme verwenden, modularisiert sind, jeweils auf die oberen Abschnitte des ersten Ladeabschnitts (150) und des zweiten Ladeabschnitts (160) des Frachteisenbahnwagens (120) oder auf die oberen Abschnitte der ersten Ladeabschnitte (150) aufgeladen sind, die in den benachbarten Frachteisenbahnwägen (120) vorliegen.

## Revendications

1. Système de simulation de freinage (100, 100') pour un wagon de chemin de fer continental, le système de simulation de freinage comprenant :
une locomotive (110) munie d'un système de freinage (112) ;
deux ou plusieurs wagons de marchandises (120) installés à l'arrière de la locomotive (110) et reliés à celle-ci, les deux ou plusieurs wagons de marchandises (120) étant reliés l'un à l'autre ;
un rail de roulement (130) sur lequel la locomotive (110) et les wagons de marchandises (120) sont entraînés ;
**caractérisée en ce qu'**il comprend
un module de freinage (140) dans lequel les dispositifs de freinage prévus dans les deux wagons de marchandises ou plus (120) du wagon de chemin de fer sont modulaires sous une forme empilable,
dans lequel le module de freinage (140) comprend des modules de freinage reliés en série au système de freinage (112) de la locomotive (110) et empilés en plusieurs couches sur une partie supérieure de chaque wagon de marchandises (120).

2. Système de simulation de freinage (100, 100') selon la revendication 1, comprenant en outre :
un poste d'inspection (170) pour un essai au sol de chacun des modules de freinage (140) ; et
un rail de transfert (180) installé entre le rail de roulement (130) et le poste d'inspection (170) et reliés entre eux.

3. Système de simulation de freinage (100, 100') selon la revendication 2, dans lequel un espace de stationnement (172) pour permettre à chaque wagon de marchandises (120) d'être garé est formé dans le poste d'inspection (170) de sorte que l'essai au sol de chacun des modules de freinage puisse être effectué dans un état où les modules de freinage sont chargés sur la partie supérieure de chaque wagon de marchandises (120).

4. Système de simulation de freinage (100, 100') selon la revendication 3, dans lequel l'espace de stationnement (172) est configuré pour correspondre au nombre de wagons de marchandises organisés (120).

5. Système de simulation de freinage (100, 100') selon la revendication 3, comprenant en outre :
un tracteur (190) pour déplacer chaque wagon de marchandises (120) vers l'espace de stationnement (172) le long du rail de transfert (180).

6. Système de simulation de freinage (100, 100') selon la revendication 1, dans lequel la locomotive (110) comprend :
un dispositif de commande (114) pour commander globalement le mouvement de l'air comprimé utilisé pour le freinage et un fonctionnement de chacun des modules de freinage (140) ; et
un moyen de surveillance (116) pour surveiller les performances de freinage de chaque module de freinage (140),
dans lequel chaque module de freinage (140) est pourvu d'un moyen de détection d'anomalie (142) pour générer un signal vers le moyen de surveillance lorsqu'une anomalie se produit pendant un essai.

7. Système de simulation de freinage (100, 100') selon la revendication 1, dans lequel un autre wagon de marchandises (120a, 120c) dans lequel d'autres modules de freinage (140a, 140c) ayant chacun une configuration différente de celles des modules de freinage (140b) sont empilés dans les multiples couches est installé et relié à l'avant ou à l'arrière du wagon de marchandises (120b) dans lequel les modules de freinage (140b) sont empilés dans les multiples couches.

8. Système de simulation de freinage (100, 100') selon la revendication 1, dans lequel chacun des deux ou plusieurs wagons de marchandises (120) est relié l'un à l'autre par un bogie articulé (122), et
chaque wagon de marchandises (120) comprend :
une première partie de chargement (150) positionnée sur la partie supérieure de chacun des wagons de marchandises (120) ; et
une seconde partie de chargement (160) positionnée sur une partie de connexion entre les wagons de marchandises voisins (120), chacun supporté par le bogie articulé (122).

9. Système de simulation de freinage (100, 100') selon la revendication 8, dans lequel les première et seconde parties de chargement (150, 160) comprennent respectivement :
des première et seconde plaques de support (152, 162) respectivement installées sur la partie supérieure de chaque wagon de marchandises (120) et sur lesquelles les modules de freinage (140) sont chargés ;
une partie de connexion de charnière (154) installée entre les première et seconde plaques de support (152, 162) et configurée pour être reliées entre elles ; et
un moyen de fixation (156, 166) pour fixer les première et seconde plaques de support (152, 162) à la partie supérieure du wagon de marchandises (120).

10. Système de simulation de freinage (100, 100') selon la revendication 8, dans lequel les modules de freinage (140) dans lesquels les dispositifs de freinage utilisant différents systèmes de freinage sont modularisés sont respectivement chargés sur les parties supérieures de la première partie de chargement (150) et de la seconde partie de chargement (160) du wagon de marchandises (120), ou sur les parties supérieures des premières parties de chargement (150) prévues dans les wagons de marchandises voisins (120).
